# EUROPÄISCHE PATENTSCHRIFT

(11) **EP 1 334 336 B1**
(45) Veröffentlichungstag und Bekanntmachung des Hinweises auf die Patenterteilung: **01.12.2004**
(21) Anmeldenummer: 01982143.8
(22) Anmeldetag: 22.09.2001
(51) Int. Cl.: G01F 11/02

(54) **VOLUMENDOSIERVENTIL**
VOLUMETRIC METERING VALVE
VALVE DE DOSAGE VOLUMETRIQUE

(30) Priorität: 26.09.2000 DE 10048024
(43) Veröffentlichungstag der Anmeldung: 13.08.2003
(73) Patentinhaber: ZIMMER, Albert, 27367 Sottum (DE)
(72) Erfinder: ZIMMER, Albert, 27367 Sottum (DE)
(74) Vertreter: Biehl, Christian, Dipl.-Phys.
(86) Internationale Anmeldenummer: PCT/DE2001/003691
(87) Internationale Veröffentlichungsnummer: WO 2002/027279

(56) Entgegenhaltungen:
- US-A- 5 467 899
- US-A- 6 085 943

## Beschreibung

Die Erfindung betrifft ein Volumendosierventil für flüssige und viskose Stoffe mit einem Ventilkörper und einem Ventilzylinder, in dem ein Kolben verschieblich angeordnet ist.

Volumendosierventile werden z. B. für Fette und Öle in der Industrie in vielfältiger Weise eingesetzt. Dabei müssen die Ventilspitzen stets an den Ort der Aufbringung gebracht werden, um die viskosen oder flüssigen Stoffe zielgenau aufzubringen.

Die für die Positionierung der Dosierventile notwendige Zeit stellt sich als begrenzender Faktor in Produktionsprozessen dar.

Erwünscht wäre daher eine schnellere Ausbringung der notwendigen Fett-, Schmierstoff- oder Farbmengen zielgenau zu bewirken.

Aus der US 5,467,899 ist dabei ein gattungsbildendes Ausbringgerät für fließfähige Materialien bekannt. Dort ist jedoch eine federvorgespannte Dosierstange durch zwei an Membranen befestigte Kolben mit den dort beschriebenen Nachteilen einer festen, nicht veränderbaren Federspannung und einer durch die Vorsehung einer Feder bedingten geringen Taktrate versehen. Der dortige sog. stop-block, der außen auf das Gehäuse aufschlägt, begrenzt weiter durch seine Masse und auch die beim Aufschlagen verursachte erhebliche Schallentwicklung die Verwendung hoher Taktraten. Er ist zudem nicht im Betrieb verstellbar.

Der Erfindung liegt die Aufgabe zugrunde, die Ausbringung der Materialmengen bei größter Genauigkeit möglichst schnell und zielgenau zu gewährleisten. Eine schnelle Verstellbarkeit im Betrieb trägt dazu bei.

Erfindungsgemäß wird diese Aufgabe durch ein Volumendosierventil mit den Merkmalen des unabhängigen Patentanspruchs 1 gelöst. Vorteilhaft ist dabei, daß die erhebliche, dem viskosen, auszubringenden Stoff mitgebbare, kinetische Energie ausreicht, eine definierte Menge von der Dosierdüse abzureißen und über eine längere Strecke in der Luft gerade zu transportieren, so daß ein zielgenauer Auftrag möglich ist.

Die Unteransprüche geben vorteilhafte Ausführungsformen der Erfindung wieder. Insbesondere ist vorteilhaft, das Volumendosierventil mit Druckluft zu betreiben, so daß der in Kommunikation mit diesem Antriebsmedium stehende im Ventilzylinder verschieblich gelagerte Antriebskolben in hohen Taktraten von beispielsweise 10 Hz betrieben werden kann. Dieser Antriebskolben steht mit einem Dosierkolben in axialer Verbindung, kann sogar einstückig mit diesem ausgebildet werden, wobei zur einstellbaren Begrenzung der Bewegungsweite dieser Antriebskolben-Dosierkolben-Einheit eine Begrenzung durch einen verstellbaren Anschlag vorgesehen ist. Bei Erreichen dieses Anschlages wird der Antriebskolben seine Bewegung stoppen und nach Öffnen einer zweiten Luftzuführung, die die gegenüberliegende, die dem Dosierkolben zugewandte Seite des auskragenden Antriebskolbenskopfes beaufschlagt, sich zurüclbewegen.

Der verstellbare Anschlag wird dabei bevorzugt als eine axial verfahrbare Anschlagmutter ausgebildet, die in einer äußeren Gewindeverzahnung mit dem verdrehbar gestalteten Ventilzylinder steht, so daß durch einfaches Verdrehen des rückwärtigen Teils des gesamten Volumendosierventils eine Verstellung der Dosiermenge einfach am Ort des Dosierens manuell möglich ist.

Die Anschlagmutter wird dabei an einem Mitdrehen dadurch gehindert, daß eine Verdrehsicherung in Form eines exzentrisch in die Mutter eingreifenden Stiftes vorgesehen ist, der sie in ihrer Verdrehung um eine Mittenachse, die durch den Dosierkolben gebildet wird, hindert. Durch Eingriff ihres Außengewindes wird die Mutter daher entlang der Stange des Austriebskolbens bzw. der Kolbenoberfläche selbst vergleiten und damit dem Antriebskolben einen größeren Bewegungsraum geben. Dieser größere Bewegungsraum führt zu einer längeren Bewegung des Austriebs- oder Dosierkolbens, der, da die restliche Bewegung kein weiteres Material fördert, sondern da diese bereits in einer Dosierkammer stattfindet, lediglich zu einer Erhöhung der kinetischen Energie beim Austrieb führt.

Die Dosierkammer selbst wird durch ein Rückschlagventil, beispielsweise aus einer federbelasteten, die Dosierkammer verschließenden Kugel verschlossen.

Dabei ist denkbar, den Anschlag auch direkt am Dosierkolben anzuordnen.
Weitere Vorteile und Merkmale der Erfindung ergeben sich aus der nachfolgenden Beschreibung eines bevorzugten Ausführungsbeispiels anhand der beigefügten Zeichnung.

Dabei zeigt:
- Fig. 1: eine schematische Darstellung eines Schnittes durch das Dosierventil in einer ersten Stellung, in der der Antriebskolben in Ruhestellung ist und der mögliche Weg für den Antriebskolben durch die Anschlagmutter auf das Mindestmaß verkürzt ist,
- Fig. 2: eine der Fig. 1 entsprechende Darstellung, in der die Anschlagmutter in einer Mittelstellung angeordnet ist, und
- Fig. 3: eine der Fig. 2 entsprechende Darstellung, in der der Antriebskolben bis zum Anschlag bewegt ist.

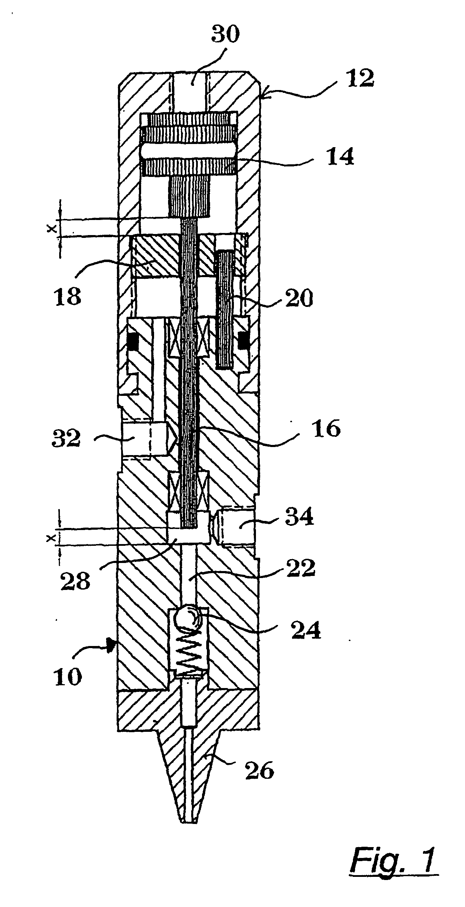

Die in der Fig. 1 dargestellte Anordnung der Antriebsund des Dosierkolbens in dem Rückschlagventil zeigt diese axial mittig angeordnet mit einem gegenüber dem Dosierkolben 16 wesentlich im Radius vergrößerten Antriebskolben 14, der unterhalb der Lufteintrittsöffnung 30 durch getakteten Lufteintrag bewegt wird und diese Bewegung durch seine einstückige Ausbildung mit dem Dosierkolben 16 als Bewegung des letzteren durch den Stoffraum 28 hindurch bis in die Dosierkammer 22 weitergibt. Auf dem den Stoffraum 28 aufnehmenden Ventilkörper 10 ist dabei ein Ventilzylinder 12 verdrehlich gelagert, wobei der Antriebskolben 14 mit dem einstückig befestigten Dosierkolben 16 innerhalb dieses Ventilzylinders coaxial zur Dosierkammer 22 verschieblich geführt ist. Der Stoffraum wird über einen Aschluß 34 mit Fett oder anderen auszubringenden Stoffen gefüllt gehalten.

Im unteren Bereich des Ventilzylinders 12 befindet sich nun ein Innengewinde, in dem eine Anschlagmutter 18 mit einem entsprechenden Außengewinde gelagert ist, die beim Drehen des Ventilzylinders 12 durch eine Verdrehsicherung 20 am Mitdrehen gehindert, sich je nach Drehsinn am Ventilzylinder 12 in Längsrichtung nach oben oder unten bewegt. Die Verdrehsicherung 20 besteht aus einem Stift, der durch eine entsprechende exzentrische Bohrung der Anschlagmutter hindurchragt.

Im unteren Bereich des Ventilkörpers 10 ist ein Rückschlagventil 24 angeordnet, das sich beim dosierten Ausbringen öffnet und damit den Weg zur Dosierdüse 26 freigibt.

Seitlich neben dem Stoffraum 28 ist mit Bezugszeichen 34 der Stoffeintritt dargestellt, an den eine Stoffzuführleitung abgekoppelt wird.

Der in der Stoffzuführleitung bestehende Druck muß unter der Schließkraft des Rückschlagventils 24 liegen.

Der Ventilzylinder 12 wird über ein 5/2-Wege-Ventil an den Luftanschlußpunkten 30, 32 mit einer Druckluft führenden Leitung verbunden, so daß durch Anlegen eines Druckes an die mit Bezugszeichen 32 bezeichneten unteren Luftanschluß eine Rückbewegung des Antriebskolbens verursacht wird.

Vor einem ersten Austrag sollte durch Drehen des Ventilzylinders die Einstellung für die auszubringende Stoffmenge erfolgen.

Befindet sich die Anschlagmutter 18 dabei in der oberen Stellung, entspricht der maximale Bewegungsweg x zwischen Anschlagmutter 18 und der Anschlagfläche des Antriebskolbens 14 dem Weg x zwischen der Stirnfläche des Dosierkolbens 16 und der Eintrittsöffnung der Dosierkammer 22, wie dies in der Fig. 1 zu erkennen ist.

Bei Betätigung des des 5/2-Wege-Ventils wird somit praktisch kein Stoff gefördert, da kein Eintritt des Kolbens in die Dosierkammer 22 bewirkt wird und somit der Druck des Rückschlagventils nicht überwunden wird.

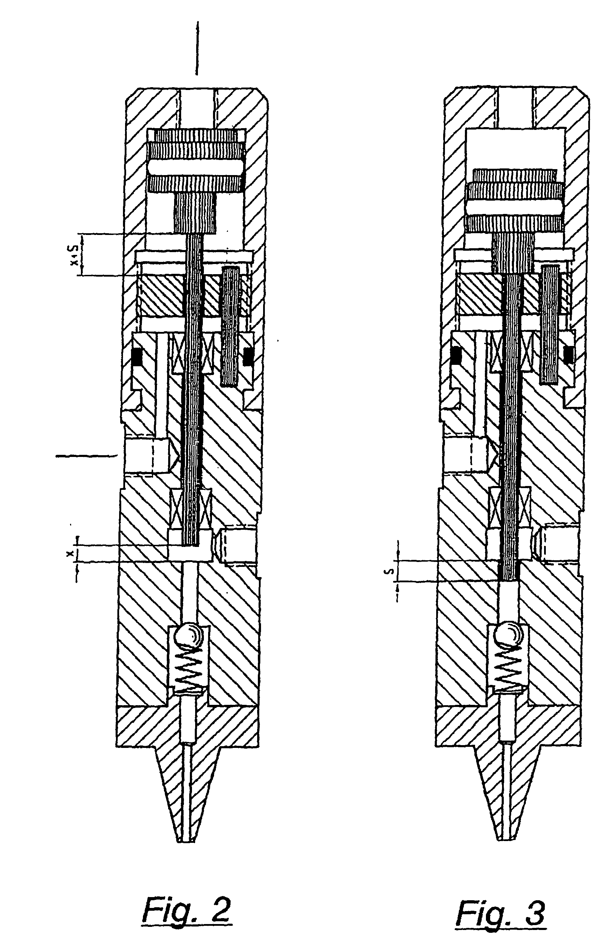

Durch Verdrehen des Ventilzylinders 12 gegen den Uhrzeigersinn wird die Anschlagmutter 18 nach unten verfahren, so daß der Anschlagweg x sich um den Dosierweg s, wie er in der Fig. 2 dargestellt ist, vergrößert. Durch Betätigung des 5/2-Wegeventils wird nun der Antriebskolben 14 mit hoher Geschwindigkeit nach unten getrieben, wobei der Dosierkolben 16 in die Dosierkammer 22 eintaucht und in die eingestellte Stoffmenge über das Rückschlagventil hinaus aus der Dosierdüse 26 heraustreibt, wie dies in der Fig. 3 dargestellt ist.

Damit wird die zu dosierende Fettmenge mit hoher Wiederholgenauigkeit unmittelbar am Ventil eingestellt werden können und der Dosiervorgang durch die Druckluftbetätigung mit so hoher Geschwindigkeit erfolgen können, daß die dem ausgetriebenen Stoff zugeführte kinetische Energie in der Lage ist, diesen Stoff vom Düsenrohr zu lösen und über eine Entfernung von beispielsweise bis zu 40 cm punktgenau auf die gewünschte Stelle zu tragen.

Bei einem strukturierten Auftragsort kann noch ein Eindringen von beispielsweise Fett in eine tiefer liegende Struktur erfolgen.

Damit wird es nicht mehr nötig, das Fettdosierventil bis zum Ort des Fettens auszurichten, sondern es wird lediglich nötig, die gewünschte Richtung einzustellen, notwendige Verfahrwege und alle dabei auftretenden Toleranzen können vermieden werden.

Die mögliche Taktfrequenz, die mit diesem Ventil erzielt wurde, beträgt 10 Hz.

Das Volumendosierventil kann - was zeichnerisch nicht dargestellt ist - mit einem im Bereich seiner Austrittsöffnung endenden Lichtleiter versehen sein, der das tatsächliche Austreten des auszubringenden Stoffs erkennt.

## Patentansprüche

1. Volumendosierventil für flüssige und viskose Stoffe mit einem Ventilkörper (10), einem Ventilzylinder (12), in dem ein Kolben verschieblich gelagert ist, und einem in Fluidkommunikation mit einem Antriebsmedium stehenden in dem Ventilzylinder verschieblichen Antriebskolben (14), der einen mit ihm verbundenen Dosierkolben (16) betätigt, wobei die Bewegungsstrecke des Antriebskolbens (14) und/oder Dosierkolbens (16) in dem Ventilzylinder (12) durch einen verstellbaren Anschlag (18) begrenzt ist, **dadurch gekennzeichnet, daß**
der verstellbare Anschlag durch eine axial verfahrbare Anschlagmutter (18) gebildet wird, die in Gewindeverzahnung mit dem verdrehbar zum Ventilkörper (10) ausgebildeten Ventilzylinder (12) in diesem angeordnet ist.

2. Volumendosierventil nach Anspruch 1, **dadurch gekennzeichnet, daß** die Anschlagmutter (18) mit einer mittigen Bohrung für den durch sie hindurch geführten Dosierkolben (16) versehen ist, und mit einer exzentrischen Aufnahme für eine Verdrehsicherung versehen ist, wobei sie auf ihrem Außenmantel eine Verzahnung besitzt, die in einer korrespondierenden Innenmantelverzahnung des Ventilzylinders (12) eingreift.

3. Volumendosierventil nach Anspruch 2, **dadurch gekennzeichnet, daß** die Verdrehsicherung ein im Ventilkörper (10) gelagerter ortsfester Stift (20) ist, der durch eine exzentrisch vorgesehene Durchlaßöffnung in der Anschlagmutter (18) hindurchragt.

4. Volumendosierventil nach Anspruch 2 oder 3, **dadurch gekennzeichnet, daß** ein im Bereich der Austrittsöffnung endender Lichtleiter vorgesehen ist, der das tatsächliche Austreten des auszubringenden Stoffs erkennt.

## Claims

1. Volumetric metering valve for liquid and viscous substances with a valve body (10), a valve cylinder (12), in which a piston is displaceably mounted, and a drive piston (14), displaceable in the valve cylinder and in fluid communication with a drive medium and which operates a metering piston connected thereto, the movement path of the drive piston (14) and/or metering piston (16) in the valve cylinder (12) being limited by an adjustable stop (18), **characterized in that** the adjustable stop is formed by an axially movable stop nut (18) in thread toothing in valve cylinder (12) constructed in rotary manner relative to the valve body (10).

2. Volumetric metering valve according to claim 1, **characterized in that** the stop nut (18) is provided with a central hole for the metering piston (16) passed therethrough and having an eccentric receptacle for a rotation preventer and having on its outer casing a tooth system, which engages in a corresponding inner casing tooth system of the valve cylinder (12).

3. Volumetric metering valve according to claim 2, **characterized in that** the rotation preventer is a pin (20) fixed in the valve body (10) and which projects through an eccentric opening in the stop nut (18).

4. Volumetric metering valve according to claim 2 or 3, **characterized in that** a light guide terminating in the vicinity of the outlet port is provided and detects the exit of the material or substance to be discharged.

## Revendications

1. Valve de dosage volumétrique pour des substances liquides et visqueuses, avec un corps de valve (10), un cylindre de valve (12), dans lequel un piston est monté de façon déplaçable, et un piston d'entraînement (14) déplaçable dans le cylindre de valve, mis en communication fluidique avec un fluide entraînement, le piston d'entraînement (14) actionnant un piston de dosage (16) relié à lui, la course de déplacement du piston d'entraînement (14) et/ou du piston de dosage (16) dans le cylindre de valve (12) étant limitée par une butée (18) réglable, **caractérisée en ce que** la butée réglable est formée par un écrou formant butée (18) déplaçable axialement, qui, avec mise en prise par filetage avec le cylindre de valve (12) réalisé de façon à pouvoir tourner par rapport au corps de valve (10), est disposé dans celui-ci.

2. Valve de dosage volumétrique selon la revendication 1, **caractérisée en ce que** l'écrou formant butée (18) est muni d'un perçage central pour le piston de dosage (16) guidé à travers lui et est muni d'un logement excentré pour assurer une sécurité de rotation, sachant qu'il comprend sur son enveloppe extérieure une denture s'engrenant dans une denture d'enveloppe intérieure correspondante du cylindre de valve (12).

3. Valve de dosage volumétrique selon la revendication 2, **caractérisée en ce que** la sécurité de rotation est formée d'une tige (20) localement fixe, montée dans le corps de valve (10) et passant par une ouverture de passage excentrée, ménagée dans l'écrou formant butée (18).

4. Valve de dosage volumétrique selon la revendication 2 ou 3, **caractérisée en ce qu'**est prévu un guide de lumière, s'achevant dans la zone de l'ouverture de sortie et identifiant la sortie effective de la substance à délivrer.
